# EUROPEAN PATENT APPLICATION

(11) **EP 3 691 242 A1**
(43) Date of publication of application: **05.08.2020**
(21) Application number: 18861750.0
(22) Date of filing: 20.09.2018
(51) Int. Cl.: H04N 5/225, B60R 1/00, G03B 15/00, H04N 5/232, H04N 5/353, H04N 7/18

(54) **IMAGE CAPTURE DEVICE AND MOVING BODY**

(30) Priority: 27.09.2017 JP 2017187197
(71) Applicant: Kyocera Corporation, Kyoto-shi Kyoto 612-8501 (JP)
(72) Inventor: NAKANISHI Yousuke, Kyoto-shi Kyoto 612-8501 (JP)
(74) Representative: Viering, Jentschura & Partner mbB Patent- und Rechtsanwälte
(86) International application number: PCT/JP2018/034894
(87) International publication number: WO 2019/065468

(57) **Abstract**

An imaging apparatus is mounted in a moveable body that moves along a movement surface. The imaging apparatus includes an imaging optical system and an image sensor. The imaging optical system forms an image of a subject located around the moveable body. The image sensor includes an imaging surface having pixels arranged thereon, the pixels capturing the image of the subject formed by the imaging optical system. The pixels belong to pixel groups, each pixel group including pixels arranged in a first direction that intersects the movement surface. The pixel groups are arranged in a second direction intersecting the first direction. The image sensor reads imaging data of the image from each pixel group in order of arrangement of the pixel groups in the second direction.

## Description

### CROSS-REFERENCE TO RELATED APPLICATION

The present application claims priority to and the benefit of Japanese Patent Application No. 2017-187197 filed September 27, 2017, the entire contents of which are incorporated herein by reference.

### TECHNICAL FIELD

The present disclosure relates to an imaging apparatus and a moveable body.

### BACKGROUND

A technique for mounting a complementary metal oxide semiconductor (CMOS) image sensor in a vehicle and capturing images of the outside of the vehicle during driving is known. For example, see patent literature (PTL) 1.

### CITATION LIST

### Patent Literature

PTL 1: JP2002-209173A

### SUMMARY

An imaging apparatus according to an embodiment of the present disclosure includes an imaging optical system and an image sensor to be mounted in a moveable body that moves along a movement surface. The imaging optical system is configured to form an image of a subject located around the moveable body. The image sensor includes an imaging surface having pixels arranged thereon, the pixels capturing the image of the subject formed by the imaging optical system. The pixels belong to pixel groups, each pixel group including pixels arranged in a first direction that intersects the movement surface. The pixel groups are arranged in a second direction intersecting the first direction. The image sensor is configured to read imaging data of the image from each pixel group in order of arrangement of the pixel groups in the second direction.

A moveable body according to an embodiment of the present disclosure moves along a movement surface. The moveable body includes an imaging apparatus mounted thereon. The imaging apparatus includes an imaging optical system and an image sensor. The imaging optical system is configured to form an image of a subject located around the moveable body. The image sensor includes an imaging surface having pixels arranged thereon, the pixels capturing the image of the subject formed by the imaging optical system. The pixels belong to pixel groups, each pixel group including pixels arranged in a first direction that intersects the movement surface. The pixel groups are arranged in a second direction intersecting the first direction. The image sensor is configured to read imaging data of the image of the subject from each pixel group in order of arrangement of the pixel groups in the second direction.

### BRIEF DESCRIPTION OF THE DRAWINGS

In the accompanying drawings:
FIG. 1 is a block diagram illustrating an example configuration of an imaging apparatus according to an embodiment;
FIG. 2 is a plan view illustrating an example arrangement of pixels on an imaging surface;
FIG. 3 is a plan view illustrating an example arrangement of pixels on an imaging surface;
FIG. 4 is a plan view illustrating an example arrangement of pixels on an imaging surface;
FIG. 5A illustrates an example of the relationship between movement of an object and readout pixels;
FIG. 5B illustrates an example of the relationship between movement of an object and readout pixels;
FIG. 5C illustrates an example of the relationship between movement of an object and readout pixels;
FIG. 6A illustrates a captured image based on imaging data read in the example in FIG. 5A;
FIG. 6B illustrates a captured image based on imaging data read in the example in FIG. 5B;
FIG. 6C illustrates a captured image based on imaging data read in the example in FIG. 5C;
FIG. 7A illustrates an example of the relationship between movement of an object and readout pixels;
FIG. 7B illustrates an example of the relationship between movement of an object and readout pixels;
FIG. 7C illustrates an example of the relationship between movement of an object and readout pixels;
FIG. 8A illustrates a captured image based on imaging data read in the example in FIG. 7A;
FIG. 8B illustrates a captured image based on imaging data read in the example in FIG. 7B;
FIG. 8C illustrates a captured image based on imaging data read in the example in FIG. 7C;
FIG. 9 is a side view illustrating an example configuration of a moveable body with an on-board camera;
FIG. 10 illustrates an example configuration of the interior of a moveable body with an on-board camera;
FIG. 11 illustrates an example of a captured image when a first direction intersects a movement surface;
FIG. 12 illustrates an example of a captured image when the first direction is parallel to the movement surface;
FIG. 13 illustrates an example of the positional relationship between the moveable body and subjects;
FIG. 14A illustrates an example image yielded by capturing an image of the subjects in FIG. 13;
FIG. 14B illustrates an example image yielded by capturing an image of the subjects in FIG. 13;
FIG. 14C illustrates an example image yielded by capturing an image of the subjects in FIG. 13; and
FIG. 15 is a plan view illustrating an example configuration of an imaging apparatus according to an embodiment.

### DETAILED DESCRIPTION

When a complementary metal oxide semiconductor (CMOS) captures an image of a moving body, focal plane distortion may occur, diagonally distorting the shape of the object in the captured image. For example, when a CMOS image sensor is mounted in a vehicle and used as an electronic mirror, the distortion of the shape of an object appearing in the image may cause the person driving the vehicle to misidentify the object.

The frame rate of imaging by the CMOS image sensor may be raised to reduce the focal plane distortion. This may lead to problems, however, such as increased power consumption or reduced image brightness due to insufficient exposure time.

The image captured by the CMOS image sensor may be corrected to reduce focal plane distortion. This may lead to problems, however, such as enlargement of the image processing circuitry or increased power consumption in the image processing circuitry.

A charge coupled device (CCD) may be used to reduce focal plane distortion. CMOS image sensors are mainly used, however, as image sensors mounted in automobiles. It is not realistic to use CCDs for only some image sensors.

A global shutter function may be used to reduce focal plane distortion, but this may cause problems such as increased costs and an increase in the area occupied by parts.

Various problems thus occur when the above-described methods are adopted to reduce focal plane distortion. As described below, an imaging apparatus 1 according to the present embodiment can reduce focal plane distortion of a captured image without incurring the above-described problems.

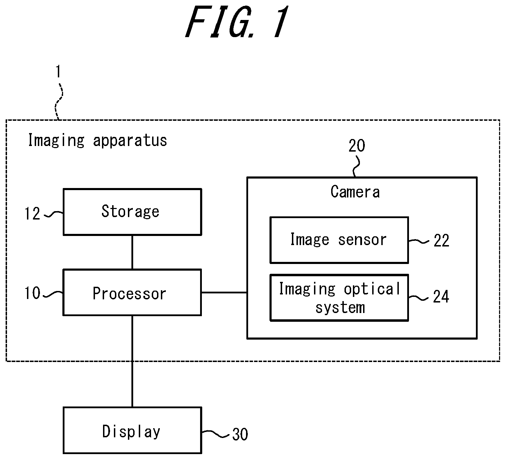

As illustrated in FIG. 1, an imaging apparatus 1 according to an embodiment includes a processor 10, a storage 12, and a camera 20. The imaging apparatus 1 connects to a display 30. The camera 20 includes an image sensor 22 and an imaging optical system 24. The imaging optical system 24 may include optical elements such as a lens or mirror. The camera 20 uses the image sensor 22 to capture a subject image formed by the imaging optical system 24. The image captured by the camera 20 is also referred to as a captured image. The image sensor 22 may be a device, such as a CMOS image sensor, in which focal plane distortion may, in principle, occur.

The processor 10 outputs control information to the camera 20 and acquires a captured image from the camera 20. The processor 10 may output the captured image to the display 30 and cause the display 30 to display the captured image.

The processor 10 may execute general processing in accordance with a program or may execute specific processing. The processor 10 may include an application specific integrated circuit (ASIC). The processor 10 may include a programmable logic device (PLD). The PLD may include a field-programmable gate array (FPGA). The processor 10 may be either a system-on-a-chip (SoC) or a system in a package (SiP) with one or a plurality of ICs, devices, or the like that work together.

The storage 12 may store various information or parameters related to operation of the imaging apparatus 1. The storage 12 may store programs executed by the processor 10. The storage 12 may, for example, be a semiconductor memory. The storage 12 may function as a working memory of the processor 10. The storage 12 may store captured images. The storage 12 may be included in the processor 10.

The display 30 may display captured images acquired from the processor 10. The display 30 may, for example, include a liquid crystal, organic electro-luminescence (EL), inorganic EL, or light emission diode (LED) display device.

The processor 10, camera 20, and display 30 may include a communication device for communicating with each other. The communication device may, for example, be a communication interface for a local area network (LAN), control area network (CAN), or the like. The communication device may communicate in a wired or wireless manner.

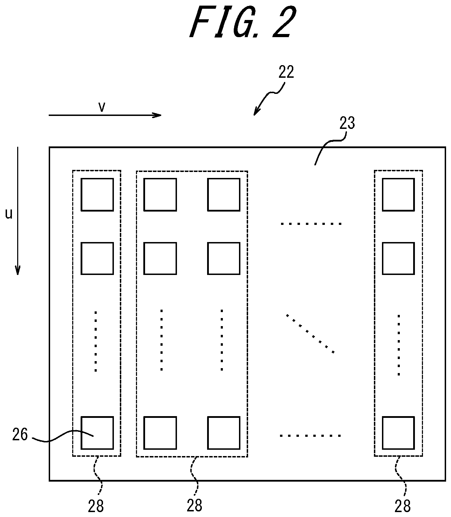

As illustrated in FIG. 2, the image sensor 22 includes an imaging surface 23 on which a plurality of pixel cells 26 are arranged. The subject image is an image formed on the imaging surface 23 by the imaging optical system 24. The image sensor 22 receives light of the subject image on each pixel cell 26 and generates a captured image based on a voltage or current signal outputted by each pixel cell 26. The voltage or current signal outputted by each pixel cell 26 is also referred to as imaging data. The pixel cells 26 may be arranged on the imaging surface 23 in a first direction indicated by u and a second direction indicated by v. The first direction is from top to bottom but may instead be a different direction. The second direction is from left to right but may instead be a different direction. The first direction and the second direction intersect each other. The first direction and the second direction may be orthogonal. A vector representing the second direction can be considered at least to have a component orthogonal to the first direction.

The image sensor 22 may include pixel groups 28 each having a plurality of pixel cells 26 as elements. The pixel group 28 may include pixel cells 26 arranged in the first direction as elements. In other words, a set of pixel cells 26 arranged in the first direction may belong to a pixel group 28. The pixel group 28 may include pixel cells 26 arranged in a straight line along the first direction. The pixel group 28 may include one column of pixel cells 26 as elements or two or more columns of pixel cells 26 as elements.

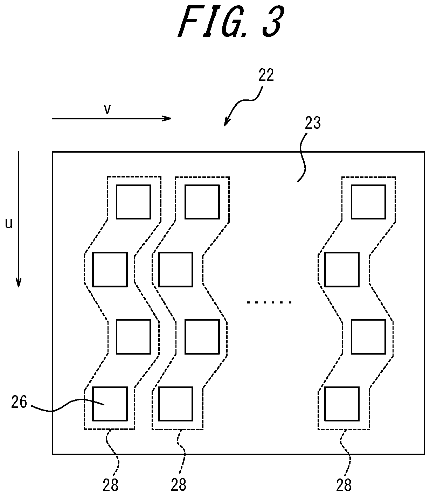

As illustrated in FIG. 3, for example, the pixel cells 26 may be arranged on the imaging surface 23 along the first direction while being shifted in the second direction. The pixel group 28 may include pixel cells 26 arranged in the first direction and shifted by a predetermined distance or less in the second direction. The predetermined distance may be a value equal or close to the length of a pixel cell 26 in the second direction or may be another value.

The pixel groups 28 each including pixel cells 26 arranged in the first direction are arranged in the second direction. Even when the second direction is not orthogonal to the first direction, at least a portion of the pixel cells 26 in the pixel groups 28 are arranged in a direction orthogonal to the first direction. The pixel cells 26 arranged in a direction orthogonal to the first direction may be in a straight line or may be shifted in the first direction. At least a portion of the pixel cells 26 belonging to a pixel group 28 may, when viewed in a direction orthogonal to the first direction, overlap with the pixel cells 26 belonging to at least one other pixel group 28.

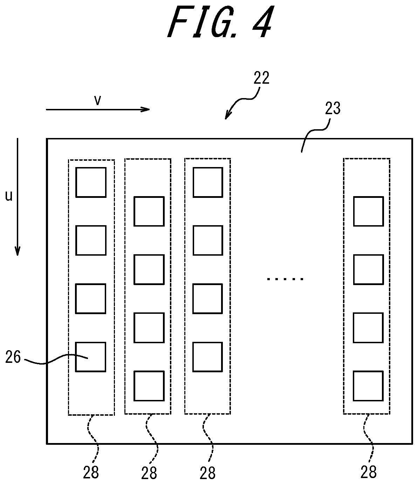

For example, as illustrated in FIG. 4, the pixel cells 26 included in the pixel groups 28 arranged in the second direction may be shifted in the first direction. In other words, the pixel cells 26 included in the pixel groups 28 arranged in the second direction need not be aligned directly in the second direction.

The image sensor 22 reads the imaging data of each pixel group 28 in order of arrangement in the second direction. Even when the second direction is not orthogonal to the first direction, the image sensor 22 can be considered to read imaging data from at least a portion of the pixel cells 26 of the pixel groups 28 in order in a direction orthogonal to the first direction. The image sensor 22 may read imaging data from each pixel cell 26 in order of arrangement in the first direction within the pixel group 28. After reading the imaging data from each pixel cell 26 in the pixel group 28, the image sensor 22 may start to read from the next pixel group 28. The image sensor 22 may be a device such as a CMOS image sensor that reads imaging data in each group of pixel cells 26 arranged in a column. The image sensor 22 is not limited to being a CMOS image sensor and may be another device that reads imaging data from the pixel groups 28 in the order of arrangement in the second direction.

The pixel groups 28 may be identified by hardware or by software. Based on control information from the processor 10, the image sensor 22 may change the first direction to a different orientation by software. In other words, the image sensor 22 may change the combinations of pixel cells 26 included in the pixel groups 28. The image sensor 22 may change the second direction to a different orientation by software.

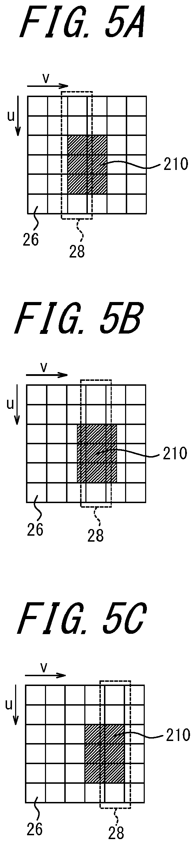

If the image sensor 22 reads the imaging data at once from all of the pixel cells 26, as with a CCD, then the subject image 210 in the captured image is unlikely to be distorted, even if the subject image 210 is moving (see FIG. 5A and the like). When imaging data is read in order from a portion of the pixel cells 26, as with a CMOS image sensor, the subject image 210 in the captured image may be distorted if the subject image 210 moves while the imaging data is being read.

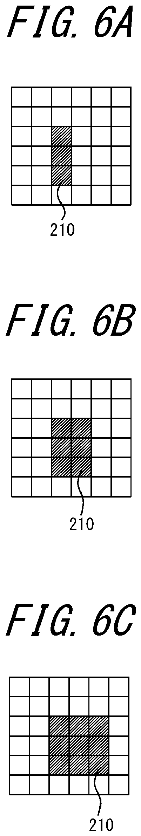

For example, when the first direction indicated by u is the direction from top to bottom, and the second direction indicated by v is the direction from left to right, as illustrated in FIGS. 5A, 5B, and 5C, then the imaging apparatus 1 can capture the subject image 210 moving in the second direction together with the passage of time. FIGS. 5A, 5B, and 5C respectively illustrate the pixel cells 26 in which the subject image 210 is formed at times represented by T1 T2, and T3. The pixel group 28 from which imaging data is read at each time is illustrated in FIGS. 5A, 5B, and 5C. The pixel group 28 includes six pixel cells 26 arranged in the first direction. FIGS. 6A, 6B, and 6C represent the captured image generated based on the imaging data read at each time illustrated in FIGS. 5A, 5B, and 5C respectively.

As illustrated in FIG. 5A, the subject image 210 at time T1 is formed on the pixel cells 26 in the third column to the fourth column from the left. The pixel group 28 from which imaging data is read at time T1 is the group in the third column from the left. Among the pixel cells 26 included in the pixel group 28 from which imaging data is read, the subject image 210 is formed in the third to the fifth pixel cells 26 from the top. Consequently, the subject image 210 appears in the third column from the left of the captured image, in the third to the fifth pixels from the top, as illustrated in FIG. 6A.

As illustrated in FIG. 5B, the subject image 210 at time T2 is formed on the pixel cells 26 in the right half of the third column to the left half of the fifth column from the left. The pixel group 28 from which imaging data is read at time T2 is the group in the fourth column from the left. Among the pixel cells 26 included in the pixel group 28 from which imaging data is read, the subject image 210 is formed in the third to the fifth pixel cells 26 from the top. Consequently, the subject image 210 further appears in the fourth column from the left of the captured image, in the third to the fifth pixels from the top, as illustrated in FIG. 6B.

As illustrated in FIG. 5C, the subject image 210 at time T3 is formed on the pixel cells 26 in the fourth column to the fifth column from the left. The pixel group 28 from which imaging data is read at time T3 is the group in the fifth column from the left. Among the pixel cells 26 included in the pixel group 28 from which imaging data is read, the subject image 210 is formed in the third to the fifth pixel cells 26 from the top. Consequently, the subject image 210 further appears in the fifth column from the left of the captured image, in the third to the fifth pixels from the top, as illustrated in FIG. 6C.

The size, in the left-right direction, of the subject image 210 appearing in the captured image corresponds to the size of three pixels, as illustrated in FIG. 6C. On the other hand, the actual size of the subject image 210 in the left-right direction corresponds to the size of two pixels, as illustrated in FIGS. 5A, 5B, and 5C. That is, as a result of the subject image 210 moving in the second direction while the imaging data is being read in order in the second direction, the shape of the subject image 210 appearing in the captured image may be expanded in the left-right direction as compared to the actual shape of the subject image 210.

If the imaging apparatus 1 captures a subject image 210 moving in the opposite direction from the second direction as time passes in the example illustrated in FIGS. 5A, 5B, 5C and FIGS. 6A, 6B, 6C, the shape of the subject image 210 appearing in the captured image may be smaller in the left-right direction than the actual shape of the subject image 210. In other words, when the imaging apparatus 1 captures a subject image 210 moving in the same direction as the second direction or in the opposite direction, the shape of the subject image 210 appearing in the captured image may be deformed in the left-right direction at a predetermined magnification as compared to the actual shape of the subject image 210. The predetermined magnification may be greater than or less than one.

The pixel cells 26 are arranged in a 6 by 6 grid in the example illustrated in FIGS. 5A, 5B, 5C and FIGS. 6A, 6B, 6C, but this arrangement is not limiting. The pixel cells 26 may be arranged in any number of rows or columns or in a diagonal grid. The pixel cells 26 may be arranged without being aligned in rows or columns. The pixel cells 26 may be arranged in various ways.

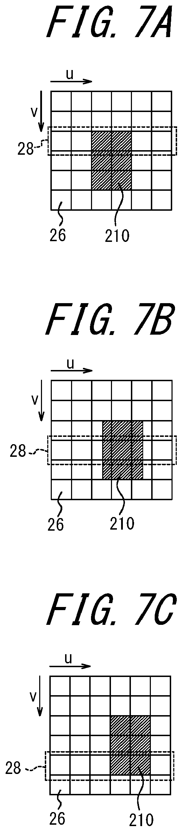

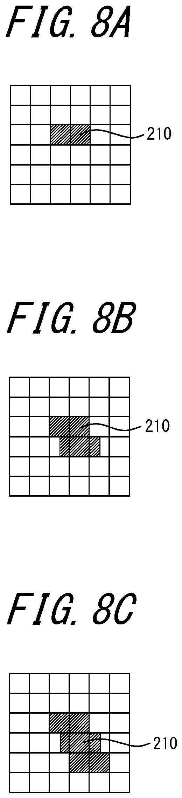

As a comparative example differing from the example in FIGS. 5A, 5B, 5C and FIGS. 6A, 6B, 6C, the imaging apparatus 1 may capture a subject image 210 moving in the first direction as time passes, as illustrated in FIGS. 7A, 7B, and 7C. The first direction in FIGS. 7A, 7B, and 7C is the direction from left to right, which differs from the first direction in FIGS. 5A, 5B, and 5C. The second direction is the direction from top to bottom. FIGS. 7A, 7B, and 7C respectively illustrate the pixel cells 26 in which the subject image 210 is formed at times represented by T1, T2, and T3 and the pixel group 28 from which imaging data is read. The pixel group 28 includes six pixel cells 26 arranged in the first direction. FIGS. 8A, 8B, and 8C represent the captured image generated by the imaging data read from the pixel group 28 illustrated in FIGS. 7A, 7B, and 7C respectively.

As illustrated in FIG. 7A, the subject image 210 at time T1 is formed on the pixel cells 26 that are in the third column to the fourth column from the left and the third row to the fifth row from the top. The pixel group 28 from which imaging data is read at time T1 is the group in the third row from the top. Among the pixel cells 26 included in the pixel group 28 from which imaging data is read, the subject image 210 is formed in the third and the fourth pixel cells 26 from the left. Consequently, the subject image 210 appears in the pixels that are in the third row from the top and the third and fourth columns from the left in the captured image, as illustrated in FIG. 8A.

As illustrated in FIG. 7B, the subject image 210 at time T2 is formed on the pixel cells 26 that are in the right half of the third column to the left half of the fifth column from the left and the third row to the fifth row from the top. The pixel group 28 from which imaging data is read at time T2 is the group in the fourth row from the top. Among the pixel cells 26 included in the pixel group 28 from which imaging data is read, the subject image 210 is formed in the right half of the pixel cells 26 in the third column, the pixel cells 26 in the fourth column, and the left half of the pixel cells 26 in the fifth column from the left. Consequently, the subject image 210 further appears in the fourth row from the top of the captured image, in the right half of the pixel in the third column, the pixel in the fourth column, and the left half of the pixel in the fifth column from the left, as illustrated in FIG. 8B.

As illustrated in FIG. 7C, the subject image 210 at time T3 is formed on the pixel cells 26 that are in the fourth column to the fifth column from the left and the third row to the fifth row from the top. The pixel group 28 from which imaging data is read at time T3 is the group in the fifth row from the top. Among the pixel cells 26 included in the pixel group 28 from which imaging data is read, the subject image 210 is formed in the fourth and the fifth pixels from the left. Consequently, the subject image 210 further appears in the fifth row from the top of the captured image, in the pixels in the fourth and fifth columns from the left, as illustrated in FIG. 8C.

As illustrated in FIG. 8C, the shape of the subject image 210 appearing in the captured image is a parallelogram. By contrast, the actual shape of the subject image 210 is a rectangle, as illustrated in FIGS. 7A, 7B, and 7C. That is, as a result of the subject image 210 moving in the first direction, which intersects the second direction, while the imaging data is being read in order in the second direction, the shape of the subject image 210 appearing in the captured image may be deformed by being distorted diagonally as compared to the actual shape of the subject image 210.

A person viewing the captured image is less likely to feel uncomfortable with the shape of the subject image 210 that appears deformed by expanding or shrinking in the left-right direction, as illustrated in FIG. 6C, than with the shape of the subject image 210 that appears deformed by being distorted diagonally as illustrated in FIG. 8C. In other words, when the first direction intersects the movement direction of the subject image 210, as illustrated in FIGS. 5A, 5B, 5C and FIGS. 6A, 6B, 6C, a person may feel more comfortable with the shape of the subject image 210 in the captured image than when the first direction is parallel to the movement direction of the subject image 210.

The imaging apparatus 1 may be configured so that the first direction is orthogonal to the movement direction of the subject image 210. In other words, a vector representing the first direction need not have a component in the same direction as the movement direction of the subject image 210. When the vector representing the first direction does not have a component in the same direction as the movement direction of the subject image 210, the subject image 210 appearing in the captured image is less likely to be distorted diagonally than when the vector representing the first direction does have such a component. Consequently, a person may feel more comfortable with the shape of the subject image 210 in the captured image.

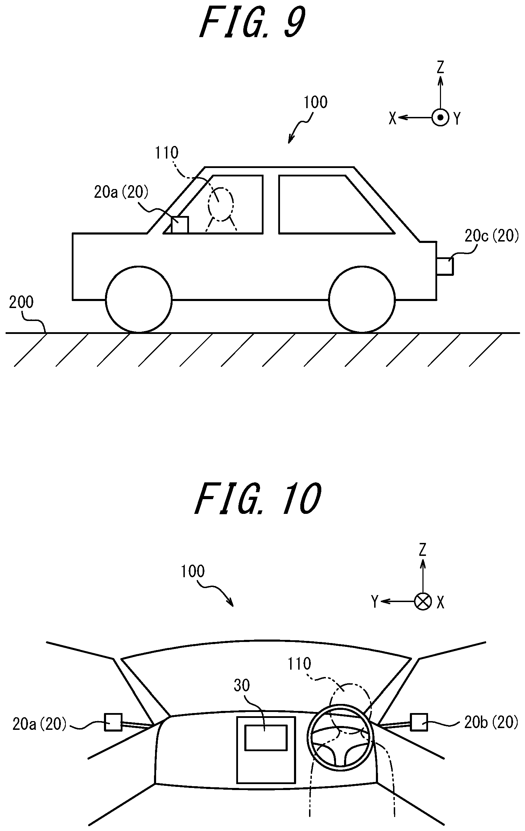

As illustrated in FIG. 9 and FIG. 10, cameras 20a, 20b, 20c of the imaging apparatus 1 may be mounted in a moveable body 100 that moves along a movement surface 200. The cameras 20a, 20b, 20c are collectively referred to as the camera 20. The movement surface 200 may be flat or curved. The movement surface 200 may be formed by a plurality of connected surfaces. The movement surface 200 illustrated in FIG. 9 is the ground and is the XY plane, but the movement surface 200 may be a variety of other surfaces. The moveable body 100 is a passenger car but may instead be another vehicle, airplane, or the like that runs on the ground, or a boat that moves on the ocean. The forward direction of the moveable body 100 is assumed to be the positive direction of the x-axis. In other words, the forward direction of the moveable body 100 in FIG. 9 is the direction from right to left. The forward direction of the moveable body 100 in FIG. 10 is the direction from the front of the drawing towards the back. A driver 110, indicated by a virtual dashed double-dotted line, is riding in the moveable body 100. A display 30 for displaying the captured image may also be mounted in the moveable body 100. The combination of the imaging apparatus 1 and the display 30 may function as an electronic mirror, a surrounding view monitor, or the like by displaying, on the display 30, images of the surroundings of the moveable body 100 captured by the imaging apparatus 1. The display 30 may be located near the center of the center console of the vehicle or may be located at the right and left sides inside the vehicle in place of side view mirrors.

The camera 20a is positioned on the left side surface of the moveable body 100 in place of the sideview mirror on the left side in the forward direction of the moveable body 100. The camera 20a captures images towards the left rear, or the diagonal left rear, of the moveable body 100. The left side in the forward direction of the moveable body 100 corresponds to the side in the positive direction of the y-axis. The camera 20b is positioned on the right side surface of the moveable body 100 in place of the sideview mirror on the right side in the forward direction of the moveable body 100. The camera 20b captures images towards the right rear, or the diagonal right rear, of the moveable body 100. The right side in the forward direction of the moveable body 100 corresponds to the side in the negative direction of the y-axis. The range captured by the cameras 20a, 20b includes the range that the driver 110 can confirm with sideview mirrors when the moveable body 100 includes sideview mirrors.

At least the imaging optical system 24 in the camera 20 may be located on the side surface of the moveable body 100. At least a portion of the imaging optical system 24 located on the subject image 210 side may be located on the side surface of the moveable body 100. The image sensor 22 may be located away from the side surface of the moveable body 100. For example, the image sensor 22 may be located inside the body of the vehicle. In this case, the subject image 210 incident on a portion of the imaging optical system 24 located on the subject image 210 side can be formed on the imaging surface 23 of the image sensor 22 via the other portion of the imaging optical system 24. In other words, the imaging apparatus 1 may include an image sensor 22 corresponding to the imaging optical system 24 located on the subject image 210 side.

The camera 20a may capture not only images towards the left rear or diagonal left rear of the moveable body 100, but also images towards the left or diagonal left front of the moveable body 100. The camera 20b may capture not only images towards the right rear or diagonal right rear of the moveable body 100, but also images towards the right or diagonal right front of the moveable body 100.

The camera 20c is positioned at the rear of the moveable body 100 as a rear camera that captures images in a direction corresponding to the rear relative to the forward direction of the moveable body 100. The rear relative to the forward direction of the moveable body 100 is the negative direction of the x-axis. The camera 20c may be positioned to replace the rear view mirror of the vehicle. When the camera 20c is positioned to replace the rear view mirror, the range captured by the camera 20c includes the range that the driver 110 can confirm with a rear view mirror.

The moveable body 100 moves along the movement surface 200. In other words, the movement direction of the moveable body 100 is along the movement surface 200. When the movement surface 200 corresponds to the xy plane, the movement direction of the moveable body 100 can be expressed as a vector in the xy plane. When the imaging apparatus 1 is mounted in the moveable body 100 so that the first direction representing the array of pixel cells 26 of the image sensor 22 intersects the movement surface 200, the first direction may intersect the movement direction of the moveable body 100.

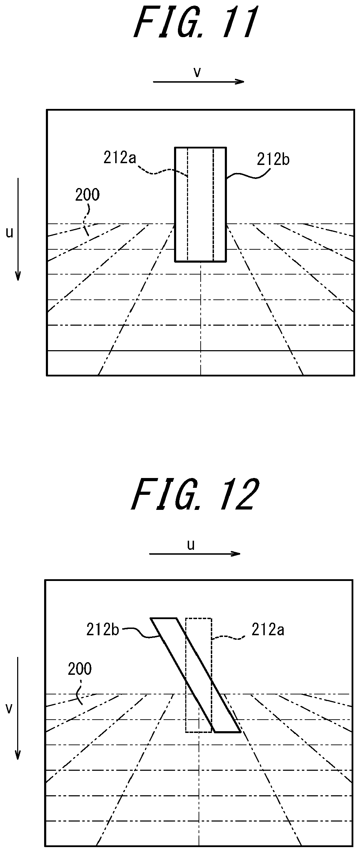

It is assumed that the subject image 210 located on the movement surface 200 is captured by the imaging apparatus 1 mounted in the moveable body 100. The shape of the subject image 210 as viewed from the camera 20 of the imaging apparatus 1 is assumed to be the rectangular subject shape 212a indicated by the dashed lines in FIGS. 11 and 12. In other words, when the imaging apparatus 1 captures a still subject image 210 while the moveable body 100 is still, the subject image 210 can appear in the captured image with the same shape as the subject shape 212a indicated by the dashed lines in FIGS. 11 and 12.

The camera 20 is assumed to read image data in order in the second direction represented by v from the pixel group 28 that includes pixel cells 26 arranged in the first direction represented by u. The first direction may be from top to bottom in the drawings. The second direction may be from left to right in the drawings. Due to movement of the moveable body 100, the subject image 210 moves relatively from the perspective of the camera 20. When the subject image 210 moves from the perspective of the camera 20, the subject image 210 in the captured image may be deformed.

When the second direction is from left to right, the movement direction of the subject image 210 may be the same as the second direction. In this case, the subject image 210 may appear in the captured image with a shape expanded in the left-right direction as compared to the actual subject shape 212a, as illustrated by the subject shape 212b indicated by solid lines in FIG. 11. The subject shape 212b in the captured image is expanded in the left-right direction relative to the actual subject shape 212a for the same reason that the subject image 210 is deformed in the captured image in the example illustrated in FIGS. 5A, 5B, 5C and FIGS. 6A, 6B, 6C.

As a comparative example, the camera 20 may read the imaging data from the pixel group 28 in order from top to bottom. This case is illustrated in FIG. 12. In other words, the second direction represented by v may be from top to bottom. When the second direction is from top to bottom, the movement direction of the subject image 210 may intersect the second direction. In this case, the subject image 210 may appear in the captured image with a shape distorted diagonally as compared to the actual subject shape 212a, as illustrated by the subject shape 212b indicated by solid lines. The subject shape 212b in the captured image is distorted diagonally relative to the actual subject shape 212a for the same reason that the subject image 210 is deformed in the captured image in the example illustrated in FIGS. 7A, 7B, 7C and FIGS. 8A, 8B, 8C.

A person viewing the captured image is less likely to feel uncomfortable with the subject shape 212b that appears expanded in the left-right direction, as illustrated in FIG. 11, than with the subject shape 212b that appears distorted diagonally as illustrated in FIG. 12. In other words, a person may feel more comfortable with the shape of the subject image 210 appearing in the captured image when the second direction is the same as the movement direction of the subject image 210 than when the second direction is orthogonal to the movement direction of the subject image 210.

When the second direction intersects the movement direction of the subject image 210, the second direction has a component in the same direction as the movement direction of the subject image 210. As a result of the second direction having a component in the same direction as the movement direction of the subject image 210, a person may feel more comfortable with the shape of the subject image appearing in the captured image than when the second direction is orthogonal to the movement direction of the subject image 210. The driver 110 of the moveable body 100 may feel more comfortable with the captured image when the captured image is used as the display image of an electronic mirror or the like in the moveable body 100. Consequently, the driver 110 is less likely to misidentify the surrounding conditions.

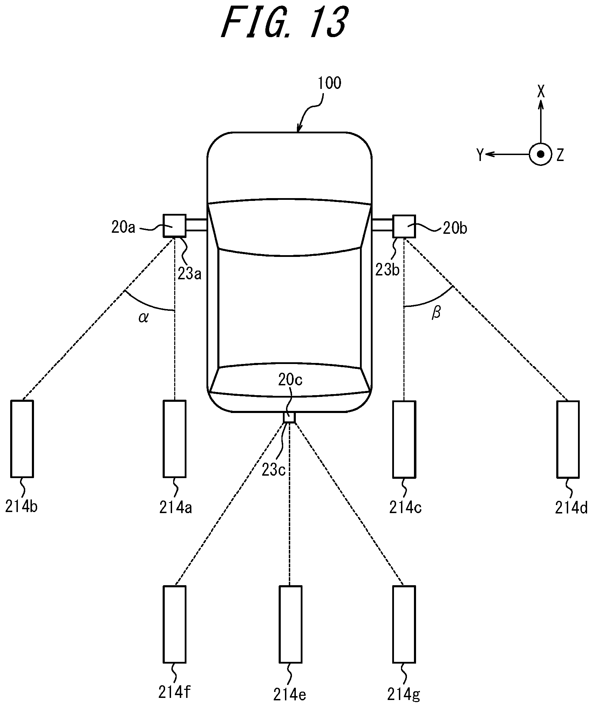

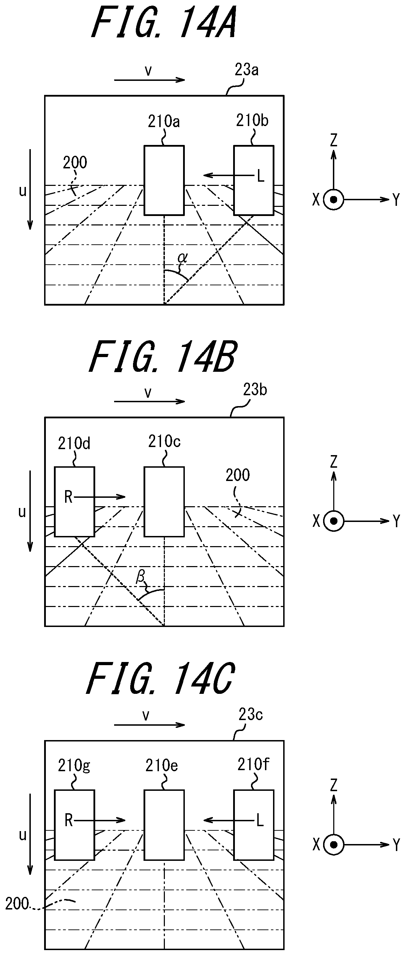

As illustrated in FIG. 13, the camera 20 mounted in the moveable body 100 can capture subjects 214a to 214g located around the moveable body 100 on the movement surface 200. The subjects 214a to 214g are collectively referred to as a subject 214. The camera 20 is assumed to be mounted in the moveable body 100 so that the imaging surface 23 lies in the yz plane. The imaging surface 23 is not limited to the yz plane and may be a different plane. In the imaging surface 23, the first direction represented by u is assumed to be the negative direction of the z-axis, and the second direction represented by v is assumed to be the positive direction of the y-axis (see FIG. 14A and the like).

The camera 20a mounted on the left side of the moveable body 100 can capture subject images 210a, 210b, located at the left rear of the moveable body 100, on the imaging surface 23a. The subject image 210a corresponds to the subject 214a, and the subject image 210b corresponds to the subject 214b. From the perspective of the imaging surface 23a, the subject image 210a is located in the opposite direction from the forward direction of the moveable body 100. The subject image 210b is assumed to be located in a direction having a predetermined angle, represented by α, with respect to the direction in which the subject image 210a is located on a surface along the xy plane. An image like the one illustrated in FIG. 14A may be formed on the imaging surface 23a. In the images illustrated in FIGS. 14A, 14B, and 14C, the direction from left to right corresponds to the positive direction of the y-axis. The direction from the back to the front corresponds to the positive direction of the x-axis. The subject image 210b is formed further in the positive direction of the y-axis than the subject image 210a. When the moveable body 100 is moving forward in the positive direction of the x-axis, the direction of the subject image 210a from the perspective of the imaging surface 23a tends not to change. Accordingly, the position where the subject image 210a is formed on the imaging surface 23a tends not to move. When the moveable body 100 is moving forward in the positive direction of the x-axis, the angle (α) representing the direction of the subject image 210b from the perspective of the imaging surface 23a may decrease. Accordingly, the position where the subject image 210b is formed on the imaging surface 23a may move in the direction represented as L in FIG. 14A. The direction represented as L is a direction from right to left in the drawing. As the angle (α) representing the direction of the subject image 210b from the perspective of the imaging surface 23a is greater, the position where the subject image 210b is formed in the imaging surface 23a may move faster.

The camera 20b mounted on the right side of the moveable body 100 can capture subject images 210c, 210d, located at the right rear of the moveable body 100, on the imaging surface 23b. The subject image 210c corresponds to the subject 214c, and the subject image 210d corresponds to the subject 214d. From the perspective of the imaging surface 23b, the subject image 210c is located in the opposite direction from the forward direction of the moveable body 100. The subject image 210d is assumed to be located in a direction having a predetermined angle, represented by β, with respect to the direction in which the subject image 210c is located on a surface along the xy plane. An image like the one illustrated in FIG. 14B may be formed on the imaging surface 23b. The subject image 210d is formed further in the negative direction of the y-axis than the subject image 210c. When the moveable body 100 is moving forward in the positive direction of the x-axis, the direction of the subject image 210c from the perspective of the imaging surface 23b tends not to change. Accordingly, the position where the subject image 210c is formed on the imaging surface 23b tends not to move. When the moveable body 100 is moving forward in the positive direction of the x-axis, the angle (β) representing the direction of the subject image 210d from the perspective of the imaging surface 23b may decrease. Accordingly, the position where the subject image 210d is formed on the imaging surface 23b may move in the direction represented as R in FIG. 14B. The direction represented as R is a direction from left to right in the drawing. As the angle (β) representing the direction of the subject image 210d from the perspective of the imaging surface 23b is greater, the position where the subject image 210d is formed in the imaging surface 23b may move faster.

As illustrated in FIGS. 14A and 14B, the position where the subject image 210b is formed on the imaging surface 23a and the position where the subject image 210d is formed on the imaging surface 23b may move in opposite directions due to forward movement of the moveable body 100. The subject images 210b and 210d appearing in the captured image may expand or shrink in the y-axis direction at a predetermined magnification.

If, on the imaging surface 23a, the first direction intersects the xy plane, which is the movement surface 200, and the second direction is the positive direction of the y-axis, then the shape of the subject image 210b in the captured image may be shrunken in the y-axis direction, since the subject image 210b moves in the negative direction of the y-axis. If, on the imaging surface 23b, the first direction intersects the xy plane, which is the movement surface 200, and the second direction is the positive direction of the y-axis, then the shape of the subject image 210d in the captured image is expanded in the y-axis direction, since the subject image 210d moves in the positive direction of the y-axis. In other words, when the second direction is the same direction on the imaging surfaces 23a and 23b located on the opposite side surfaces of the moveable body 100, the subject images 210 appearing in the captured image may deform differently from each other.

When the second direction of the imaging surface 23b is the negative direction of the y-axis, i.e. opposite the second direction of the imaging surface 23a, then the shape of the subject image 210d appearing in the captured image is shrunken in the y-axis direction. By the second direction of the imaging surface 23a and the second direction of the imaging surface 23b being opposite directions, the subject images 210b and 210d appearing in the captured images can deform in the same way. In other words, when the second directions are opposite each other on the imaging surfaces 23 located on opposite side surfaces of the moveable body 100, the shapes of the subject images 210 appearing in the images captured at the imaging surfaces 23 can deform in the same way with respect to the actual shapes of the subject images 210. Consequently, the driver 110 of the moveable body 100 is less likely to be uncomfortable with the difference between the left and right captured images.

The camera 20c mounted at the rear of the moveable body 100 can capture subject images 210e, 210f, 210g, located at the rear of the moveable body 100, on the imaging surface 23c. The subject images 210e, 210f, 210g correspond respectively to the subjects 214e, 214f, 214g. From the perspective of the imaging surface 23c, the subject image 210e is located in the opposite direction from the forward direction of the moveable body 100. The subject images 210f, 210g are each assumed to be located in a direction having a predetermined angle with respect to the direction in which the subject image 210e is located on a surface along the xy plane. An image like the one illustrated in FIG. 14C may be formed on the imaging surface 23c. The subject image 210f is formed further in the positive direction of the y-axis than the subject image 210e. The subject image 210g is formed further in the negative direction of the y-axis than the subject image 210e. When the moveable body 100 is moving forward in the positive direction of the x-axis, the direction of the subject image 210e from the perspective of the imaging surface 23c tends not to change. Accordingly, the position where the subject image 210e is formed on the imaging surface 23c tends not to move. When the moveable body 100 is moving forward in the positive direction of the x-axis, the positions where the subject images 210f and 210g are formed on the imaging surface 23c may move respectively in the directions represented by L and R. The positions where the subject images 210f and 210g are formed move because the predetermined angle between the direction in which the subject images 210f and 210g are located and the direction in which the subject image 210e is located decreases due to forward movement of the moveable body 100.

Suppose that the second direction is the positive direction of the y-axis on the imaging surface 23c. The subject image 210f moves in the negative direction of the y-axis, and the subject image 210g moves in the positive direction of the y-axis. The shape of the subject image 210f in the captured image may therefore be shrunken in the y-axis direction, and the shape of the subject image 210g in the captured image may be expanded in the y-axis direction. If the second direction is the negative direction of the y-axis on the imaging surface 23c, the shape of the subject image 210f in the captured image may be expanded in the y-axis direction, and the shape of the subject image 210g in the captured image may be shrunken in the y-axis direction. In other words, depending on the position at which the subject image 210 is formed on the imaging surface 23, the subject image 210 appearing in the captured image may deform into a different shape.

The processor 10 may correct the shape of the subject image 210 appearing in the captured image. The processor 10 may correct the shape of the subject image 210 in the captured image based on the second direction of the imaging surface 23 and the position at which the subject image 210 appears in the captured image. With this approach, the driver 110 is even less likely to feel uncomfortable with the captured image.

In the example illustrated in FIG. 14A, for example, the processor 10 may correct the shape of the subject image 210b in the captured image by expanding the shape in the y-axis direction. The processor 10 may progressively increase the magnification for expanding the shape of the subject image 210b in the captured image in the y-axis direction as the position at which the subject image 210b formed on the imaging surface 23a is farther in the positive direction of the y-axis than the position at which the subject image 210a is formed.

In the example illustrated in FIG. 14B, for example, the processor 10 may correct the shape of the subject image 210d in the captured image by shrinking the shape in the y-axis direction. The processor 10 may progressively decrease the magnification for shrinking the shape of the subject image 210d in the captured image in the y-axis direction as the position at which the subject image 210d formed on the imaging surface 23b is farther in the negative direction of the y-axis than the position at which the subject image 210c is formed.

In the example illustrated in FIG. 14C, for example, the processor 10 may correct the shape of the subject image 210f in the captured image by expanding the shape in the y-axis direction. The processor 10 may progressively increase the magnification for expanding the shape of the subject image 210f in the captured image in the y-axis direction as the position at which the subject image 210f formed on the imaging surface 23c is farther in the positive direction of the y-axis than the position at which the subject image 210e is formed. The processor 10 may correct the shape of the subject image 210g in the captured image by shrinking the shape in the y-axis direction. The processor 10 may progressively decrease the magnification for shrinking the shape of the subject image 210g in the captured image in the y-axis direction as the position at which the subject image 210g formed on the imaging surface 23c is farther in the negative direction of the y-axis than the position at which the subject image 210e is formed.

The processor 10 may correct the shape of the subject image 210 in the captured image based also on the speed of the moveable body 100. For example, the processor 10 may increase the magnification for expanding the shape of the subject image 210 in the y-axis direction, or decrease the magnification for shrinking the shape of the subject image 210 in the y-axis direction, progressively as the moveable body 100 moves forward at a faster speed. With this approach, the driver 110 is even less likely to feel uncomfortable with the captured image. The processor 10 may correct the shape of the subject image 210 in the captured image based on the moving speed of the position where the subject image 210 is formed on the imaging surface 23. The processor 10 may calculate the moving speed of the position where the subject image 210 is formed on the imaging surface 23 based on the speed of the moveable body 100.

The moving speed of the moveable body 100 may be less when moving in reverse than when moving forward. The deformation of the shape of the subject image 210 in the captured image may be considered negligible when the moveable body 100 moves in reverse. In this case, the processor 10 may be configured not to correct the captured image. This configuration can reduce the load of the processor 10.

When the moveable body 100 moves along a narrow road or is in a traffic jam, the moving speed of the moveable body 100 may be less than when the moveable body 100 is moving normally on a highway, a main road, or the like. The deformation of the shape of the subject image 210 in the captured image may be considered negligible when the moving speed of the moveable body 100 is less than a predetermined speed. In this case, the processor 10 may be configured not to correct the captured image. This configuration can reduce the load of the processor 10. The predetermined speed may be determined based on a variety of information such as the position of the moveable body 100 and the surrounding conditions of the moveable body 100.

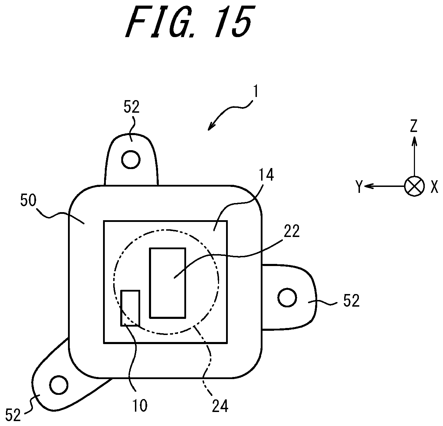

When the imaging apparatus 1 is mounted in the moveable body 100, the relationship between the movement surface 200 and the first and second directions that specify the order in which the image sensor 22 reads imaging data from the pixel cells 26 can be adjusted. The imaging apparatus 1 may be mounted in the moveable body 100 so that the first direction intersects the movement surface 200. The imaging apparatus 1 may, for example, include a substrate 14 on which the image sensor 22 is mounted, as illustrated in FIG. 15. The processor 10 may be further mounted on the substrate 14. The image sensor 22 may be mounted so that the first direction becomes the positive direction of the z-axis and the second direction becomes the negative direction of the y-axis. The imaging optical system 24 indicated by a virtual dashed double-dotted line may be positioned so that the optical axis thereof matches the center of the imaging surface 23 of the image sensor 22.

The imaging apparatus 1 may include a housing 50. The housing 50 may include an attachment portion 52 for attaching the imaging apparatus 1 to the moveable body 100. The attachment portion 52 may include a hole through which a screw or the like passes. The housing 50 may include at least two attachment portions 52. The attachment portion 52 may be positioned around the housing 50. The attachment portion 52 may be positioned on the opposite surface of the housing 50 from the imaging optical system 24.

The attachment portion 52 may be positioned so as not to be point-symmetric with respect to any point of the housing 50. This configuration allows the attachment portion 52 to specify the relationship between the first direction on the imaging surface 23 and the movement surface 200. The imaging apparatus 1 can be mounted in the moveable body 100 so that the first direction intersects the movement surface 200. When the first direction can be changed based on control information from the processor 10, the processor 10 can control the relationship between the first direction and the movement surface 200 in conjunction with the actual attachment state as a result of the attachment direction of the imaging apparatus 1 being specified by the attachment portion 52.

The imaging apparatus 1 may include a mark or the like on the housing 50 to represent the first direction or the second direction of the image sensor 22. When the attachment portion 52 is not point-symmetric with respect to any point of the housing 50, the position of the attachment portion 52 can be considered a mark representing the first direction or the second direction of the image sensor 22. The provision of a mark on the imaging apparatus 1 to represent the first direction or the second direction reduces the likelihood of mistakes when the imaging apparatus 1 is attached to the moveable body 100.

The camera 20a may be mounted on the left side and the camera 20b on the right side of the moveable body 100, as in the example in FIG. 13. In this case, the attachment portion 52 of the camera 20a and the attachment portion 52 of the camera 20b may have different positional relationships. This configuration reduces the probability that cameras 20 with different second directions will be mounted in reverse on the moveable body 100.

The moveable body 100 according to the present disclosure may encompass vehicles, ships, and the like. The term "vehicle" in the present disclosure includes, but is not limited to, automobiles and industrial vehicles and may also include railway vehicles, vehicles for daily life, and aircraft that run on a runway. Automobiles include, but are not limited to, passenger vehicles, trucks, buses, motorcycles, and trolley buses, and may include other vehicles that travel on the road. Industrial vehicles include industrial vehicles for agriculture and for construction. Industrial vehicles include, but are not limited to, forklifts and golf carts. Industrial vehicles for agriculture include, but are not limited to, tractors, cultivators, transplanters, binders, combines, and lawnmowers. Industrial vehicles for construction include, but are not limited to, bulldozers, scrapers, backhoes, cranes, dump cars, and road rollers. The term "vehicle" includes human-powered vehicles. The vehicle is not limited to the above-listed types. For example, automobiles may include industrial vehicles that can be driven on the road. The same vehicle may also be included in multiple categories. The term "ship" in the present disclosure includes marine jets, boats, and tankers.

Although embodiments of the present disclosure have been described through drawings and examples, it is to be noted that various changes and modifications will be apparent to those skilled in the art on the basis of the present disclosure. Therefore, such changes and modifications are to be understood as included within the scope of the present disclosure. For example, the functions and the like included in the various components may be reordered in any logically consistent way. Furthermore, components may be combined into one or divided. While embodiments of the present disclosure have been described focusing on apparatuses, the present disclosure may also be embodied as a method that includes steps performed by the components of an apparatus. The present disclosure may also be embodied as a method executed by a processor provided in an apparatus, as a program, or as a recording medium having a program recorded thereon. Such embodiments are also to be understood as falling within the scope of the present disclosure.

### REFERENCE SIGNS LIST

- 1: Imaging apparatus
- 10: Processor
- 12: Storage
- 14: Substrate
- 20 (20a, 20b, 20c): Camera
- 22: Image sensor
- 23 (23a, 23b, 23c): Imaging surface
- 24: Imaging optical system
- 26: Pixel cell
- 28: Pixel group
- 30: Display
- 50: Housing
- 52: Attachment portion
- 100: Moveable body
- 110: Driver
- 200: Movement surface
- 210 (210a to 210g): Subject image
- 212a, 212b: Subject shape

## Claims

1. An imaging apparatus comprising:
an imaging optical system and an image sensor to be mounted in a moveable body that moves along a movement surface;
the imaging optical system configured to form an image of a subject located around the moveable body;
the image sensor including an imaging surface having pixels arranged thereon, the pixels capturing the image of the subject formed by the imaging optical system and belonging to pixel groups, each pixel group including pixels arranged in a first direction that intersect the movement surface;
the pixel groups being arranged in a second direction intersecting the first direction; and
the image sensor configured to read imaging data of the image from each pixel group in order of arrangement of the pixel groups in the second direction.

2. The imaging apparatus of claim 1, wherein the first direction is orthogonal to a movement direction of the image of the subject.

3. The imaging apparatus of claim 1 or 2, wherein the moveable body is a vehicle.

4. The imaging apparatus of any one of claims 1 to 3, wherein at least a portion of the imaging optical system located towards the subject is located on a side surface of the moveable body.

5. The imaging apparatus of claim 4,
wherein the imaging optical system is located on a right side surface and a left side surface of the moveable body; and
wherein the second direction in the image sensor corresponding to the imaging optical system located on the right side surface of the moveable body is in an opposite direction from the second direction in the image sensor corresponding to the imaging optical system located on the left side surface of the moveable body.

6. The imaging apparatus of any one of claims 1 to 5, further comprising:
a processor configured to acquire a captured image from the image sensor; and
perform correction on the captured image by at least one of expanding or shrinking the captured image in the second direction.

7. The imaging apparatus of claim 6, wherein the processor is configured to perform the correction based on a speed of the moveable body.

8. The imaging apparatus of claim 6 or 7, wherein the processor is configured to perform the correction based on a position along the second direction within the captured image.

9. The imaging apparatus of any one of claims 1 to 8, further comprising:
an attachment portion to be attached to the moveable body;
wherein a direction of attachment to the moveable body is specified by the attachment portion.

10. The imaging apparatus of any one of claims 1 to 9, further comprising a mark specifying a direction of attachment to the moveable body.

11. A moveable body that moves along a movement surface, the moveable body comprising:
an imaging apparatus mounted thereon, the imaging apparatus including an imaging optical system and an image sensor;
the imaging optical system configured to form an image of a subject located around the moveable body; and
the image sensor including an imaging surface having pixels arranged thereon, the pixels capturing the image of the subject formed by the imaging optical system and belonging to pixel groups, each pixel group including pixels arranged in a first direction that intersects the movement surface and the pixel groups being arranged in a second direction intersecting the first direction;
wherein the image sensor is configured to read imaging data of the image of the subject from each pixel group in order of arrangement of the pixel groups in the second direction.
